# EUROPÄISCHE PATENTSCHRIFT

(11) **EP 3 578 439 B1**
(45) Veröffentlichungstag und Bekanntmachung des Hinweises auf die Patenterteilung: **17.08.2022**
(21) Anmeldenummer: 19179560.8
(22) Anmeldetag: 11.06.2019
(51) Int. Cl.: B62D 21/02, B62D 21/10, B62D 29/04

(54) **LEICHTBAU-CHASSIS**
LIGHTWEIGHT CHASSIS
CHÂSSIS DE CONSTRUCTION LÉGÈRE

(30) Priorität: 08.06.2018 DE 102018113731
(43) Veröffentlichungstag der Anmeldung: 11.12.2019
(73) Patentinhaber: Erwin Hymer Group SE, 88339 Bad Waldsee (DE)
(72) Erfinder: Kaiser Ria, 21077 Hamburg (DE); Weltjen, Martin, 21726 Oldendorf (DE); Kasten, Ole, 21680 Stade (DE)
(74) Vertreter: Waller, Stefan

(56) Entgegenhaltungen:
- EP-A1- 3 239 022
- WO-A1-2014/096445
- WO-A1-2014/121856
- DE-U1-202012 012 603
- US-A1- 2014 049 033

## Beschreibung

Die Erfindung betrifft ein Fahrzeugchassis für ein Landfahrzeug, insbesondere für ein Reisemobil oder Freizeitfahrzeug, wobei das Fahrzeugchassis in Leichtbauweise aufgebaut ist.

Leichtbau-Fahrzeugchassis sind aus dem Stand der Technik, beispielsweise aus der WO 2014/096445 bekannt. Üblicherweise werden bei einem Fahrzeugchassis ein vorderes Chassismodul, insbesondere ein Triebkopf, sowie ein hinteres Chassismodul, bevorzugt aus Leichtbauweise, über Flanschmittel miteinander verbunden. Das hintere Chassismodul umfasst dabei tragende Komponenten, welche jedoch im Stand der Technik üblicherweise als Metall-Längsträger oder als Leichtbaukonstruktion aus Längs- und Querträger-Komponenten aufgebaut sind.

Nachteilig an bekannten Leichtbauchassis ist, dass die Verwendung von Metall-Längsträgern nach wie vor einen erheblichen Beitrag zum Gesamtgewicht des Chassis leistet, und dass die Verwendung von Leichtbau-Längsträgern den Einsatz zusätzlicher Querverbindungen nötig macht, um dem Chassis die notwendige tragende Stabilität zu verleihen.

Die EP 3 239 022 A1 offenbart ein Fahrzeugchassis gemäß dem Oberbegriff des Anspruchs 1.

Aufgabe der vorliegenden Erfindung ist es, ein Chassis aus Leichtbaumaterialien bereitzustellen, welches ohne oder nur mit einer untergeordneten Anzahl von Querträgern, die vorzugsweise keine tragenden Eigenschaften im Sinne der Statik des Chassis aufweisen, auskommt.

Diese Aufgabe wird ausgehend vom Oberbegriff des Anspruchs 1 durch die kennzeichnenden Merkmale des Anspruchs 1 gelöst. Vorteilhafte Weiterbildungen sowie zweckmäßige Ausgestaltungen sind in den abhängigen Ansprüchen angegeben.

Das erfindungsgemäße Fahrzeugchassis, insbesondere für ein Reisemobil, umfasst ein vorderes Chassismodul, insbesondere einen Triebkopf sowie ein hinteres Chassismodul. Das vordere Chassismodul ist mit dem hinteren Chassismodul über mindestens ein Flanschmittel zur Ausbildung des gesamten Fahrzeugchassis verbunden. Die tragenden Komponenten des hinteren Chassismoduls sind aus Leichtbaumaterialien aufgebaut und erfindungsgemäß als Längsprofile sowie als Z-Profile ausgebildet.

Die Verwendung von Leichtbaumaterial-Profilen als Längsträger bietet bei vergleichbarer Stabilität zu den klassischen metallischen Längsträgern eine erhebliche Gewichtsreduktion. Die Profile weisen dabei in der Regel keine ausschließlich flächigen Bauteile auf, sondern sind im Querschnitt durch zweidimensionale Strukturen gebildet, so dass sie auch parallel zum Unterboden bzw. Laufboden eines Fahrzeugs verlaufende Profilabschnitte aufweisen. Leichtbaumaterialien können dabei Laminate und gezogene Strukturen aus Verbundwerkstoffen oder auch Sandwichkonstruktionen aus unterschiedlichen Materialien sein.

Das Z-Profil stellt eine Unterkategorie der Winkelprofile dar. Es handelt sich um ein langes Bauteil, dessen Querschnitt dem Buchstaben Z ähnelt. Dabei verläuft ein im Wesentlichen vertikal angeordneter Abschnitt zwischen zwei Auslegern, welche in unterschiedliche horizontale Richtungen (z.B. nach links und rechts) an unterschiedlichen Enden des vertikalen Abschnitts abragen. Aus dem Stahlbau sind Z-Profile bekannt.

Insbesondere die Nutzung von Z-Profilen (im Querschnitt Z-förmig) vereint die Längsstabilität auf Zug sowie die Querstabilität gegen Knicken und erlaubt gleichzeitig, aufgrund der abgewinkelten, zu den jeweiligen Ebenen des Unterbodens und des Laufbodens parallelen Z-Schenkel eine gute Anbindung an die weiteren Komponenten des Chassis.

Unter dem hinteren Chassismodul ist vorliegend auch eine Kombination aus einem durch die Längsprofile statisch tragend ausgebildeten Untermodul und weiteren Modulen zu verstehen, wobei die weiteren Module, beispielsweise ein Achsmodul oder ein Heckgaragenmodul nicht zwingend von den tragenden Profilen, insbesondere Z-Profilen durchlaufen werden müssen. Derartige Modulaufbauten sind Gegenstand anderer Anmeldungen der Anmelderin.

Insbesondere von Relevanz ist die tragende Ausgestaltung durch Leichtbau-Längsprofile, insbesondere Z-Profile in dem Bereich zwischen hinterer Achsaufnahme und vorderer Triebkopfanbindung.

In einer bevorzugten Ausführungsform ist vorgesehen, dass die tragenden Komponenten mindestens zwei, vorzugsweise vier Längsprofile umfassen.

Die Verwendung von vorzugsweise vier Längsprofilen, insbesondere von vier Z-Profilen ermöglicht es, die Profile so nebeneinander über den Flächenbereich des hinteren Chassismoduls zu verteilen, dass Querprofile bzw. Querträger nicht erforderlich sind. Auf diese Weise steht zumindest in Längsrichtung erhöhter Stauraum zur Verfügung, der für andere Komponenten genutzt werden kann.

In einer weiteren zweckmäßigen Ausgestaltung ist vorgesehen, dass das hintere Chassismodul frei von Querträgern als tragende Komponenten ausgebildet ist.

Die entsprechende Anordnung der Längsprofile, so dass auf tragende Querträger im hinteren Chassismodul verzichtet werden kann, erlaubt eine Nutzung des entstehenden Stauraums für längsorientierte Komponenten, beispielsweise Tanks. In einer weiteren zweckmäßigen Ausgestaltung ist vorgesehen, dass das hintere Chassismodul an beiden Längsseiten ein äußeres sowie mindestens ein inneres Längsprofil umfasst, wobei das äußere Längsprofil eine Außenkante des Unterbodens abschließt und das innere Längsprofil einen Abstand zum äußeren Längsprofil aufweist.

Werden auf beiden Seiten in Längsrichtung des hinteren Chassismoduls Längsprofile derart angeordnet, dass ein Längsprofil die äußeren Seiten des hinteren Chassismoduls beschränkt und ein weiteres Längsprofil mit einem Abstand dazu nach innen versetzt angeordnet ist, so kann der Abstand der Längsprofile derart gewählt werden, dass gänzlich auf Querträger verzichtet werden kann, ohne die Stabilität des Laufbodens oder des Unterbodens zu benachteiligen.

Eine zweckmäßige Weiterbildung sieht dabei vor, dass die Längsprofile in vertikaler Richtung zueinander zumindest teilweise unterschiedliche Dimensionen, also Höhen aufweisen. Insbesondere ist vorgesehen, dass verschiedene nebeneinander angeordnete Längsprofile in vertikaler Richtung zumindest teilweise unterschiedliche Höhen aufweisen.

Die Längsprofile können zumindest teilweise in vertikaler Richtung unterschiedliche Höhen aufweisen, wodurch sich unterschiedliche Anbringungsebenen an Oberseite und/oder Unterseite realisieren lassen. Insbesondere verschiedene Unterbodenebenen oder Oberbodenebenen sind dadurch realisierbar.

Durch die unterschiedlich in ihrer Höhe dimensionierten Längsprofile ist es möglich, dass beispielsweise in die äußeren Längsprofile ein Unterboden eingelegt wird, und die inneren Längsprofile auf dem Unterboden aufstehen, ohne dass sich ein Versatz in der oberen Ebene des Laufbodens, bzw. der Auflage des Laufbodens ausbildet.

Die Erfindung sieht vor, dass die als Z-Profile ausgebildeten Längsprofile derart angeordnet sind, dass sie an einer vertikalen Symmetrieebene in der Mitte des Fahrzeugs gespiegelt sind.

Auf diese Weise wird eine symmetrische links und rechts des Fahrzeugs gleichwirkende Anordnung der Z-Profile erreicht, sodass beispielsweise, wie oben beschrieben, ein Unterboden eingelegt und ein Laufboden aufgelegt werden kann.

Überdies ist es zweckmäßig, dass die Längsprofile derart voneinander beanstandet sind, dass zwischen den Längsprofilen selbst Stauräume gebildet werden. Dazu können insbesondere die oberen Schenkel der nebeneinander angeordneten Z-Profile voneinander weg, also in entgegengesetzte Richtungen weisen, wohingegen die unteren Schenkel der nebeneinander angeordneten Z-Profile einander zugewandt sind.

Durch die Anordnung von vier Längsprofilen, nämlich Z-Profilen, welche einerseits mit der Außenkante eines Untergrunds abschließen, und andererseits in den Innenraum hinein versetzt sind, entstehen zwischen den außenseitigen Längsprofilen und den nach innen versetzten Längsprofilen Stauräume, in welchen z.B. Frisch-, oder Abwassertanks eines Reisemobil untergebracht werden können. Zusätzlich entsteht in der Mitte ein gewissermaßen doppelt abgestimmter Stauraum, welcher sowohl durch die äußeren Längsprofile als auch die inneren Längsprofile gegenüber Beschädigungen von außen, beispielsweise bei einer Fahrzeugkollision, geschützt ist.

In diesem Stauraum lassen sich beispielsweise Batteriekomponenten oder andere empfindliche Bauteile anordnen, welche besonders geschützt werden müssen. In einer weiteren bevorzugten Ausführungsform ist vorgesehen, dass die Längsprofile als Z-Profile ausgebildet sind, wobei mindestens zwei benachbarte Z-Profile, vorzugsweise je zwei benachbarte Z-Profile einander in horizontaler Richtung Spiegelsymmetrisch gegenüberliegend angeordnet sind, und sich an einem oberen oder unteren Z-Schenkel zumindest teilweise überlappen.

Auf diese Weise entsteht durch die Anordnung von gespiegelten Doppel-Z-Profilen eine Art U-Profil mit überstehendem Kragen. Diese Art von Profilen erlaubt eine besonders gute Anbindung an die Bodenebenen und gestattet dazu das Einlegen von Leitungen oder sonstigen Bestandteilen in den Innenraum des U's (U-Profils).

Eine Weiterbildung sieht überdies vor, dass mindestens zwei benachbarte Längsprofile, insbesondere Z-Profile, miteinander verbunden, insbesondere verklebt und/oder verschraubt und/oder vernietet ausgebildet sind.

Die Verbindung benachbarter Längsprofile durch Kleben, Schrauben oder Nieten erlaubt es, die statischen Eigenschaften des Chassis vorteilhaft zu verstärken, soweit einzelne Profile dies nicht oder nur unzureichend gewährleisten können.

Eine vorteilhafte Ausführung sieht dabei vor, dass das Längsprofil mindestens einen Hohlraum einschließt, insbesondere als Strangpress-Z-Profil ausgebildet ist.

Z-Profile können nicht nur in der Form abgekanteter Längsprofile vorliegen. Vielmehr können auch Z-förmige Profile mit einem Hohlraum vorgesehen sein, an dessen oberen Wandung ein seitlicher Ausleger in die eine horizontale Richtung (z.B. nach links) und an dessen unterer Wandung ein Ausleger in die andere horizontale Richtung (z.B. rechts) absteht. Diese Profile liefern einerseits die oben bereits beschriebene Funktionalität zur Aufnahme und Befestigung von Bodenelementen und/oder Triebkopfanbindungen, andererseits sind sie extrem stabil und können als statische Tragelemente entlang des Fahrzeugchassis definierte Kräfte aufnehmen und in die Fahrwerkskomponenten (z.B. Triebkopf, Achsaufnahme) einleiten.

Besonders vorteilhaft ist es, in dem mindestens einen Hohlraum mindestens einen Steg einzuschließen, insbesondere mindestens eine Zwischenwand vorzusehen und/oder, dass mindestens ein zusätzlicher Ausleger von einer Wandfläche des Hohlraums senkrecht zu dieser bevorzugt nach außen absteht.

Auf diese Weise können definierte Kanäle für die Aufnahme von Leitungswegen geschaffen werden. Alternativ oder ergänzend wird die Stabilität und Steifigkeit weiterhin verbessert.

Zur weiteren Verdeutlichung der Erfindung wird auf die Fig. 1 bis 5 verwiesen. Dabei zeigt:
- Fig. 1: ein Fahrzeugchassis mit einem vorderen Chassismodul und einem hinteren Chassismodul,
- Fig. 2: eine Explosionsdarstellung des hinteren Chassismoduls unter getrennter Darstellung einiger Untermodule,
- Fig. 3: eine Darstellung des Rahmenmoduls mit Längsträgern als Bestandteil des hinteren Chassismoduls,
- Fig. 4a: eine Darstellung eines Rahmenmoduls mit Längsträgern in Form von miteinander verbundenen Z-Profilen,
- Fig. 4b: eine alternative Darstellung eines Rahmenmoduls mit Längsträgern in Form von miteinander verbundenen Z-Profilen und
- Fig. 5a-d: Z-Profile mit integriertem Hohlraum und abstehenden Auslegern.

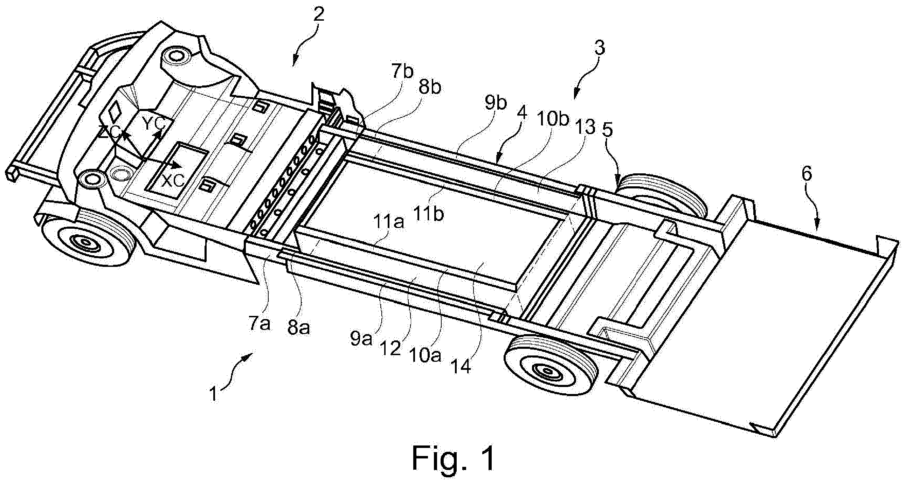

Im Einzelnen zeigt Fig. 1 ein Fahrzeugchassis 1, welches ein vorderes Chassismodul 2 in Form eines Treibkopfs und ein hinteres Chassismodul 3 umfasst. Das hintere Chassismodul 3 ist dabei aus drei Untermodulen, dem Rahmenmodul 4, dem Achswannenmodul 5 und dem Heckmodul 6 aufgebaut.

Das vordere Chassismodul 2 ist mit dem Rahmenmodul 4 des hinteren Chassismoduls 3 über Flanschmittel 7a und 7b verbunden. Die Flanschmittel 7a und 7b greifen dabei an die tragenden Längsprofile 8a und 8b des Rahmenmoduls 4 an und verbinden damit das hintere Chassismodul 3 mit dem Triebkopf.

Die Längsprofile 8a und 8b sind als Z-Profile am äußeren Rand des Rahmenmoduls 4 angeordnet. Die oberen Schenkel 9a und 9b der Z-Profile 8a und 8b weisen dabei jeweils nach außen, um innenliegenden Stauraum nicht zu behindern.

Neben den Z-Profilen 8a und 8b sind jeweils nach innen versetzt weitere Z-Profile 10a und 10b vorgesehen, welche die tragenden Eigenschaften des Rahmenmoduls 4 weiter aussteifen. Die Z-Profile 10a und 10b weisen mit ihren oberen Schenkeln 11a und 11b nach innen, um den Stauraum zwischen den benachbarten äußeren Z-Profilen nicht zu behindern.

Zwischen den Z-Profilen 8a und 10a ist ein Stauraum vorgesehen, in welchem vorliegend ein Frischwassertank 12 angeordnet ist. Entsprechend ist zwischen den Z-Profilen 8b und 10b ein Stauraum vorgesehen, in welchem vorliegend ein Schmutzwassertank 13 angeordnet ist. Auch andere Arten von Stauraumnutzung sind selbstverständlich denkbar.

Im stark geschützten Bereich zwischen den inneren Z-Profilen 10a und 10b ist vorliegend ein Batteriekasten oder ein Kasten 30 für empfindliche Gerätschaften oder Elektronik vorgesehen, welcher durch die doppelte Abschirmung der Z-Profile besonders gegen einen seitlichen Aufprall, beispielsweise durch eine Fahrzeugkollision geschützt ist.

Die Z-Profile 8a und 8b sowie 10a und 10b enden vor dem Achswannenmodul 5 und dienen ggf. noch zur Anbindung und statischen Krafteinleitung des Achswannenmoduls 5 in das Rahmenmodul 4. Im Einzelfall können die Profile zu diesem Zweck noch leicht in das Achswannenmodul 5 hineinragen oder dieses ggf. durchlaufen, je nachdem, welche statischen Eigenschaften und welchen Aufbau das Leichtbauchassis für das betreffende Fahrzeug und den gewünschten Aufbau aufweisen 5 muss.

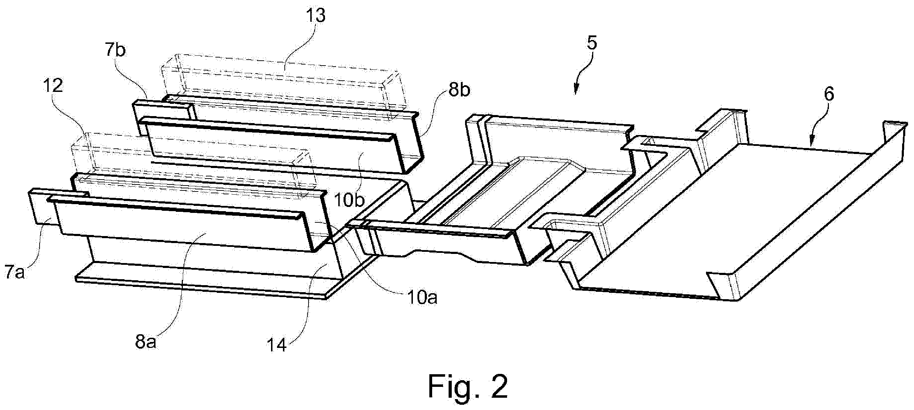

Die Fig. 2 zeigt in Explosionsdarstellung die Komponenten der Fig.1. Gleiche Bestandteile sind mit gleichen Bezugszeichen versehen.

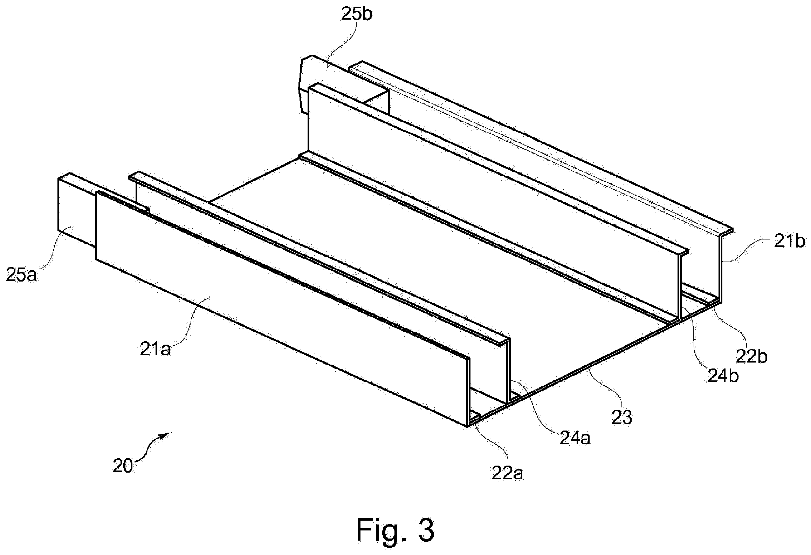

Die Fig. 3 zeigt eine alternative Anordnung der Z-Profile zur Ausbildung eines hinteren Chassismoduls oder eines Rahmenmoduls 20.

Im dargestellten Ausführungsfall wird in zwei außen liegende Z-Profile 21a und 21b, deren untere Schenkel 22a und 22b einander zugewandt angeordnet sind, ein Unterboden 23 eingelegt. Auf den Unterboden 23 aufgestellt sind zwei weitere Z-Profile 24a und 24b in gleicher Orientierung zu den Profilen 20 21a und 21b angeordnet. Je nachdem, welche Stauraumanordnung gewünscht ist, können die Schenkel der Profile 24a und 24b in dieselbe Richtung weisen, wie die der Profile 21a und 21b oder diesen zugewandt sein.

Die Profile 24a und 24b sind in ihrer vertikalen Dimensionierung um die Stärke des Unterbodens 23 kürzer ausgebildet, um die oberen Schenkel der Z-Profile 21a und 21b und die der Z-Profile 24a und 24b auf einer Ebene liegen zu lassen. Somit ist eine plane Anordnung eines Oberbodens (nicht 30 dargestellt) bzw. eines Laufbodens (nicht gezeigt) möglich.

An den vorderen Enden der Z-Profile 21a und 21b sind jeweils Flanschmittel 25a und 25b vorgesehen, um das Chassismodul bzw. das Rahmenmodul an einen Triebkopf anzubinden.

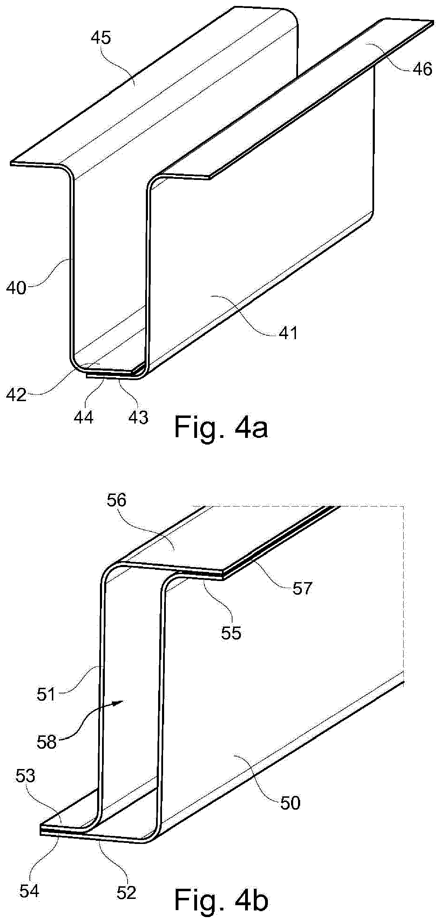

Die Fig. 4a zeigt eine schematische Darstellung einer Anordnung von zwei Z-Profilen 40 und 41, welche vorliegend zu einer Art "U-Profil" zusammengefügt sind. Die Vorteile einer entsprechenden Anordnung sind oben dargelegt. Die Z-Profile 40 und 41 überlappen sich an ihren unteren Schenkeln 42 und 43 und sind vorliegend durch eine zwischen den Flächen der unteren Schenkel 42 und 43 angeordnete Klebeschicht 44 miteinander verbunden. Die oberen Schenkel 45 und 46 der beiden Z-Profile 40 und 41 weisen voneinander weg und können damit als bevorzugte Auflage für z.B. einen Laufboden dienen.

Die Fig. 4b zeigt eine alternative schematische Darstellung einer Anordnung von zwei Z-Profilen 50 und 51. Die Z-Profile 50 und 51 sind vorliegend parallel zueinander angeordnet. Das Z-Profil 50 liegt dabei unter dem Z-Profil 51. Der untere Schenkel 53 des Z-Profils 51 liegt dabei auf dem unteren Schenkel 52 des Z-Profils 50 auf. Zwischen den beiden Schenkeln 52 und 53 ist eine Klebeschicht 54 zur Verbindung ausgebildet.

In analoger Weise liegt der obere Schenkel 56 des Z-Profile 51 auf dem oberen Schenkel 55 des Z-Profils 50 auf, wobei auch zwischen diesen Schenkeln eine Klebeschicht 57 vorgesehen ist. Zwischen den Z-Profile 50 und 51 entsteht auf diese Weise ein Hohlraum 58, welcher z.B. für die Anordnung von Leitungen oder dergleichen genutzt werden kann. Darüber hinaus erreicht diese Konstruktion, ähnlich zu der oben bereits beschriebenen U-förmigen Anordnung eine besondere Stabilität und kann somit das erfindungsgemäße verbessert Fahrzeugchassis ausbilden.

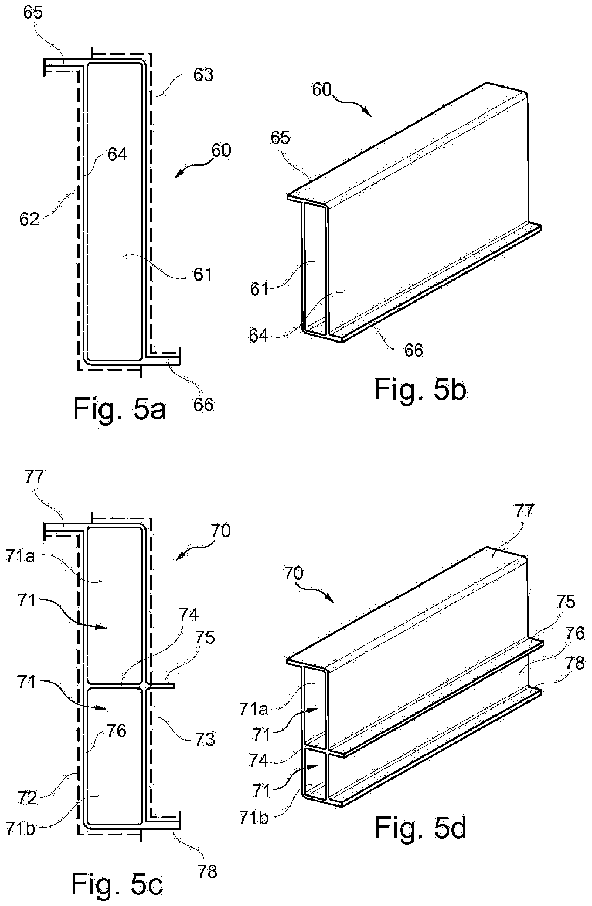

Die Fig. 5a zeigt eine Schnittdarstellung durch ein Z-Profil 60 mit einem innenliegenden Hohlraum 61.

Die Fig. 5b zeigt einen Abschnitt dieses Profils als perspektivische Darstellung. Das Profil umfasst einen längs gerichteten Hohlraum 61, welcher als Kombination von zwei Z-förmigen Geometrien 62 sowie 63, vorliegend gestrichelt dargestellt, verbunden an ihren jeweiligen horizontalen Auslegern, ausgebildet ist. Das Z-Profil 60 mit Hohlraum 61 ist dabei vorzugsweise einstückig ausgebildet. Der Hohlraum 61 ist frei von Unterbrechungen in Form von Quer- oder Längsstegen.

Insgesamt weist das Z-Profil 60, ebenso wie die aus rein flächigem Material hergestellten, oben beschriebenen Z-Profile, einen vertikal verlaufenden Abschnitt 64 und zwei horizontale Ausleger 65 und 66, welche in unterschiedliche Richtungen vom Abschnitt 64 abragen auf. Auf diese Weise können die oben beschriebenen Vorteile, z.B. die Aufnahme eines Bodenelements und die Ausbildung statisch tragender Komponenten im Chassisbau erfüllt werden.

Die Fig. 5c zeigt eine Schnittdarstellung durch ein Z-Profil 70 mit einem innenliegenden Hohlraum 71.

Die Fig. 5b zeigt einen Abschnitt dieses Profils als perspektivische Darstellung. Das Profil umfasst einen längs gerichteten Hohlraum 71, welcher als Kombination von zwei Z-förmigen Geometrien 72 sowie 73, vorliegend gestrichelt dargestellt, verbunden an ihren jeweiligen horizontalen Auslegern, ausgebildet ist. Das Z-Profil 70 mit Hohlraum 71 ist dabei vorzugsweise einstückig ausgebildet.

Insgesamt weist das Z-Profil 70, ebenso wie die aus rein flächigem Material hergestellten, oben beschriebenen Z-Profile, einen vertikal verlaufenden Abschnitt 76 und zwei horizontale Ausleger 77 und 78, welche in unterschiedliche Richtungen vom Abschnitt 76 abragen auf. Auf diese Weise 25 können die oben beschriebenen Vorteile, z.B. die Aufnahme eines Bodenelements und die Ausbildung statisch tragender Komponenten im Chassisbau erfüllt werden.

Der Hohlraum 71 ist auf der Hälfte seiner vertikalen 30 Ausdehnung zumindest teilweise von einer Unterbrechung in Form eines Querstegs 74 durchlaufen. Durch die Unterbrechung 74 wird ein oberer Hohlraumabschnitt 71a und ein unterer Hohlraumabschnitt 71b gebildet. Der Quersteg 74 erzielt einerseits eine weitere Stabilisierung des Z-Profils, andererseits kann auch der Hohlraum für unterschiedliche Funktionen zur Durchführung von Leitungen oder dergleichen genutzt werden, welche voneinander getrennt werden sollen.

In Verlängerung des Querstegs 74 ist vorliegend auf der rechten Seite des Z-Profils 70, parallel zu einem unteren Ausleger 78, ein mittlerer Ausleger 75 ausgebildet. Der mittlere Ausleger 75 kann ebenso zur Aufnahme von Bodenelementen dienen und weitere statische Funktionen erfüllen. Es ist ebenso vorgesehen, jedoch vorliegend nicht dargestellt, dass der Ausleger 75 auf der anderen Seite, parallel und unterhalb zum oberen Ausleger 77 des Z-Profils angeordnet ist. Auch eine beidseitige Anordnung ist denkbar.

## Patentansprüche

1. Fahrzeugchassis (1) für ein Landfahrzeug, insbesondere für ein Reisemobil oder Freizeitfahrzeug, wobei das Fahrzeugchassis ein vorderes Chassismodul (2), insbesondere einen Triebkopf, sowie ein hinteres Chassismodul (3) umfasst, wobe das vordere Chassismodul mit dem hinteren Chassismodul über mindestens ein Flanschmittel (7a, 7b) zur Ausbildung des Fahrzeugchassis verbunden ist, und wobei das hintere Chassismodul oder ein Untermodul tragende Komponenten aus Leichtbaumaterial umfasst, **dadurch gekennzeichnet, dass** idie tragenden Komponenten als Längsprofil (8a, 8b, 10a, 10b, 21a, 21b, 24a, 24b, 40, 41, 50, 51, 62, 63, 72, 73) sowie als Z-Profile ausgebildet sind, dass vier Längsprofile ausgebildet sind und die Anordnung der Z-Profile an einer vertikalen Symmetrieebene in der Mitte des Fahrzeugs gespiegelt ist.

2. Fahrzeugchassis nach Anspruch 1,
**dadurch gekennzeichnet,**
**dass** das hintere Chassismodul frei von Querträgern als tragende Komponenten ausgebildet ist.

3. Fahrzeugchassis nach Anspruch 1 oder 2,
**dadurch gekennzeichnet,**
**dass** das hintere Chassismodul an beiden Längsseiten ein äußeres sowie mindestens ein inneres Längsprofil umfasst, wobei das äußere Längsprofil eine Außenkante eines Unterbodens abschließt und das innere Längsprofil einen Abstand zum äußeren Längsprofil aufweist.

4. Fahrzeugchassis nach einem der vorangegangenen Ansprüche,
**dadurch gekennzeichnet,**
**dass** die Längsprofile in vertikaler Richtung zumindest teilweise unterschiedliche Höhen aufweisen, insbesondere verschiedene Längsprofile in vertikaler Richtung unterschiedliche Höhen aufweisen.

5. Fahrzeugchassis nach einem der vorangegangenen Ansprüche,
**dadurch gekennzeichnet,**
**dass** die Längsprofile derart voneinander beabstandet sind, dass zwischen den Längsprofilen Stauräume ausgebildet sind.

6. Fahrzeugchassis nach einem der vorangegangenen Ansprüche,
**dadurch gekennzeichnet,**
**dass** mindestens zwei benachbarte Z-Profile, vorzugsweise je zwei benachbarte Z-Profile, einander in horizontaler Richtung spiegelsymmetrisch gegenüberliegend angeordnet sind, und sich an einem oberen oder unteren Z-Schenkel zumindest teilweise überlappen.

7. Fahrzeugchassis nach einem der vorangegangenen Ansprüche,
**dadurch gekennzeichnet,**
**dass** mindestens zwei benachbarte Längsprofile miteinander verbunden, insbesondere verklebt und/oder verschraubt und/oder vernietet ausgebildet sind und/oder sich an einem oberen Schenkel (45, 55, 9A) sowie an einem unteren Schenkel (42, 52) überlappen, insbesondere dort miteinander verbunden, insbesondere verklebt und/oder verschraubt und/oder vernietet sind.

8. Fahrzeugchassis nach einem der vorangegangenen Ansprüche, **dadurch gekennzeichnet,**
**dass** das Längsprofil mindestens einen Hohlraum (58, 61, 71) einschließt, insbesondere als Strangpress-Z-Profil ausgebildet ist.

9. Fahrzeugchassis nach Anspruch 8,
**dadurch gekennzeichnet,**
**dass** das Längsprofil in dem mindestens einen Hohlraum mindestens einen Steg einschließt, insbesondere mindestens eine Zwischenwand umfasst und/oder mindestens ein zusätzlicher Ausleger (75) von einer Wandfläche des Hohlraums senkrecht zu dieser bevorzugt nach außen absteht.

## Claims

1. Vehicle chassis (1) for a land vehicle, in particular for a motor home or leisure vehicle, wherein the vehicle chassis comprises a front chassis module (2), in particular a traction unit, and a rear chassis module (3), wherein the front chassis module is connected to the rear chassis module via at least one flange means (7a, 7b) to form the vehicle chassis, and wherein the rear chassis module or a sub-module comprises supporting components made of lightweight material, **characterized in that** the supporting components take the form of longitudinal profiles (8a, 8b, 10a, 10b, 21a, 21b, 24a, 24b, 40, 41, 50, 51, 62, 63, 72, 73) and of Z profiles, **in that** four longitudinal profiles are formed and the arrangement of the Z profiles is mirrored on a vertical plane of symmetry in the centre of the vehicle.

2. Vehicle chassis according to Claim 1, **characterized**
**in that** the rear chassis module is designed to be free of crossmembers as supporting components.

3. Vehicle chassis according to Claim 1 or 2, **characterized**
**in that** the rear chassis module comprises an outer and at least one inner longitudinal profile on both longitudinal sides, wherein the outer longitudinal profile closes off an outer edge of an underfloor and the inner longitudinal profile has a distance from the outer longitudinal profile.

4. Vehicle chassis according to one of the preceding claims,
**characterized**
**in that** the longitudinal profiles at least partially have different heights in the vertical direction, in particular different longitudinal profiles have different heights in the vertical direction.

5. Vehicle chassis according to one of the preceding claims,
**characterized**
**in that** the longitudinal profiles are spaced apart from one another in such a way that stowage compartments are formed between the longitudinal profiles.

6. Vehicle chassis according to one of the preceding claims,
**characterized**
**in that** at least two adjacent Z profiles, preferably in each case two adjacent Z profiles, are arranged opposite to one another in the horizontal direction with mirror symmetry and at least partially overlap at an upper or lower Z leg.

7. Vehicle chassis according to one of the preceding claims,
**characterized**
**in that** at least two adjacent longitudinal profiles are connected to one another, in particular are designed to be adhesively bonded and/or screwed and/or riveted and/or overlap at an upper leg (45, 55, 9A) and at a lower leg (42, 52), in particular are connected to one another there, in particular are adhesively bonded and/or screwed and/or riveted.

8. Vehicle chassis according to one of the preceding claims,
**characterized**
**in that** the longitudinal profile includes at least one cavity (58, 61, 71), in particular takes the form of an extruded Z profile.

9. Vehicle chassis according to Claim 8, **characterized**
**in that** the longitudinal profile includes at least one web in the at least one cavity, in particular comprises at least one intermediate wall and/or at least one additional cantilever (75) projects preferably outwardly from a wall surface of the cavity perpendicular thereto.

## Revendications

1. Châssis de véhicule (1) pour un véhicule terrestre, notamment pour une caravane ou un véhicule de loisirs, le châssis de véhicule comprenant un module de châssis avant (2), notamment une tête motrice, ainsi qu'un module de châssis arrière (3), le module de châssis avant étant relié au module de châssis arrière par l'intermédiaire d'au moins un moyen de bride (7a, 7b) pour former le châssis du véhicule, et le module de châssis arrière ou un sous-module comprenant des composants porteurs en matériau de construction léger, **caractérisé en ce que** les composants porteurs sont réalisés sous forme de profilés longitudinaux (8a, 8b, 10a, 10b, 21a, 21b, 24a, 24b, 40, 41, 50, 51, 62, 63, 72, 73), ainsi que sous forme de profilés en Z,
**en ce que** quatre profilés longitudinaux sont réalisés et l'agencement des profilés en Z est réfléchi sur un plan de symétrie vertical au centre du véhicule.

2. Châssis de véhicule selon la revendication 1, **caractérisé en ce que**
le module de châssis arrière est réalisé exempt de supports transversaux en tant que composants porteurs.

3. Châssis de véhicule selon la revendication 1 ou 2, **caractérisé en ce que**
le module de châssis arrière comprend sur les deux côtés longitudinaux un profilé longitudinal extérieur ainsi qu'au moins un profilé longitudinal intérieur, le profilé longitudinal extérieur clôturant un bord extérieur d'un sous-plancher et le profilé longitudinal intérieur présentant une distance par rapport au profilé longitudinal extérieur.

4. Châssis de véhicule selon l'une quelconque des revendications précédentes,
**caractérisé en ce que**
les profilés longitudinaux présentent des hauteurs au moins partiellement différentes dans la direction verticale, notamment différents profilés longitudinaux présentent des hauteurs différentes dans la direction verticale.

5. Châssis de véhicule selon l'une quelconque des revendications précédentes,
**caractérisé en ce que**
les profilés longitudinaux sont espacés les uns des autres de telle sorte que des espaces de rangement sont formés entre les profilés longitudinaux.

6. Châssis de véhicule selon l'une quelconque des revendications précédentes,
**caractérisé en ce que**
au moins deux profilés en Z voisins, de préférence respectivement deux profilés en Z voisins, sont agencés en vis-à-vis dans la direction horizontale selon une symétrie de miroir, et se chevauchent au moins partiellement au niveau d'une branche supérieure ou inférieure du Z.

7. Châssis de véhicule selon l'une quelconque des revendications précédentes,
**caractérisé en ce que**
au moins deux profilés longitudinaux voisins sont reliés entre eux, notamment sont réalisés sous forme collée et/ou vissée et/ou rivetée et/ou se chevauchent au niveau d'une branche supérieure (45, 55, 9A) ainsi qu'au niveau d'une branche inférieure (42, 52), notamment y sont reliés entre eux, notamment y sont collés et/ou vissés et/ou rivetés.

8. Châssis de véhicule selon l'une quelconque des revendications précédentes,
**caractérisé en ce que**
le profilé longitudinal inclut au moins un espace creux (58, 61, 71), notamment est réalisé sous forme de profilé en Z extrudé.

9. Châssis de véhicule selon la revendication 8, **caractérisé en ce que**
le profilé longitudinal inclut au moins une âme dans l'au moins un espace creux, notamment comprend au moins une paroi intermédiaire et/ou au moins un bras supplémentaire (75) fait saillie à partir d'une surface de paroi de l'espace creux, perpendiculairement à celle-ci, de préférence vers l'extérieur.
